Europäisches Patentamt

European Patent Office

Office européen des brevets

(19)

(11) **EP 1 004 904 A2**

(12) **EUROPÄISCHE PATENTANMELDUNG**

(43) Veröffentlichungstag:
**31.05.2000   Patentblatt 2000/22**

(51) Int Cl.⁷: **G02B 6/13**

(21) Anmeldenummer: **99440284.0**

(22) Anmeldetag: **22.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.10.1998   DE 19849612**

(71) Anmelder: **ALCATEL**
**75008 Paris (FR)**

(72) Erfinder: **Weber, Dieter, Dr.**
**70806 Kornwestheim (DE)**

(74) Vertreter: **Rausch, Gabriele, Dr. et al**
**Alcatel**
**Intellectual Property Department, Stuttgart**
**Postfach 30 09 29**
**70449 Stuttgart (DE)**

(54) **Planarer optischer Wellenleiter und Verfahren zur räumlich gezielten Erhöhung der Brechzahl in einem Glas**

(57)     Zur Erhöhung der Brechzahl in einem Glas, insbesondere in planaren optischen Wellenleitern, werden üblicherweise zunächst Maßnahmen zur Verstärkung der Photosensitivität ergriffen. Durch Beleuchten mit UV-Licht läßt sich anschließend eine Brechzahlerhöhung erzielen. Aufgabe der Erfindung ist es, die mit den Maßnahmen zur Verstärkung der Photosensitivität verbundenen Nachteile (mangelnde Dauerhaftigkeit, zusätzliche optische Verluste) zu vermeiden.

Bei dem erfindungsgemäßen Verfahren zur räumlich gezielten Erhöhung der Brechzahl in einer Glas-schicht, die durch Abscheiden eines hydrolytischen Glasvorprodukts auf einer Unterlage im Wege der Flammhydrolyse und anschließendes Versintern des Glasvorprodukts hergestellt worden ist, werden *keine* Maßnahmen zur Erhöhung der Photosensitivität ergriffen. Statt dessen wird dort, wo die Brechzahl des Glases erhöht werden soll, Wärme zugeführt. Es hat sich gezeigt, daß dadurch eine Verdichtung des gesinterten Glases eintritt, die mit einer Brechzahlerhöhung einhergeht. Die chemische Zusammensetzung der so behandelten Bereiche ist die gleiche wie die der unbehandelten Bereiche.

Fig. 1

EP 1 004 904 A2

**Beschreibung**

Die Erfindung betrifft einen planaren optischen Wellenleiter nach dem Oberbegriff des Anspruchs 1 sowie ein Verfahren zur räumlich gezielten Erhöhung der Brechzahl in einem Glas nach dem Oberbegriff des Anspruchs 5.

Gattungsgemäße planare optische Wellenleiter sind bekannt aus einem Aufsatz von G. D. Maxwell mit dem Titel *"Photosensitivity & rare-earth doping in flame hydrolysis deposited planar silica waveguides "*, Proceedings of the International Society for Optical Engineering (SPIE), vol. 2695, Seiten 16 - 29. Allen dort beschriebenen Glaswellenleitern ist gemein, daß infolge geeigneter Maßnahmen die Photosensitivität des verwendeten Glases erhöht ist. Als Photosensitivität bezeichnet man die Eigenschaft eines Stoffs, auf eine Bestrahlung mit Licht geeigneter Wellenlänge mit einer mehr oder weniger dauerhaften Brechzahländerung zu reagieren. Unter Ausnutzung dieses Effekts entstehen in den optischen Wellenleitern durch lokal beschränkte Bestrahlung mit UV-Licht Bereiche, in denen die Brechzahl gegenüber den angrenzenden Bereichen erhöht ist. Durch entsprechende Anordnung dieser Bereiche läßt sich beispielsweise ein Bragg-Gitter in dem planaren optischen Wellenleiter erzeugen. Bragg-Gitter spielen eine wichtige Rolle in Übertragungseinrichtungen, die auf dem Prinzip des optischem Wellenlängenmultiplexen beruhen.

Die zur Herstellung optischer Wellenleiter verwendeten Silicatgläser haben von sich aus eine äußerst geringe Photosensitivität. Ohne besondere Behandlung läßt sich daher nur eine sehr geringe Brechzahländerung herbeiführen, wenn das Glas einem UV-Laser ausgesetzt wird. In dem soeben genannten Aufsatz von G. D. Maxwell sind mehrere Maßnahme aufgezählt, wie die Photosensitivität erhöht werden kann.

Eine Maßnahme besteht darin, das Glas während des Sinterns einer reduzierenden Atmosphäre auszusetzen. Dies führt jedoch beim gesinterten Glas zu erhöhten optischen Verlusten für die üblicherweise in der optischen Übertragungstechnik verwendeten Wellenlängen. Bei einer anderen, auch bei optischen Fasern verwendeten Maßnahme setzt man das Glas bei hohem Druck einer Wasserstoffatmosphäre aus. Dieser Prozeß, der auch als "Wasserstoffbeladung" bezeichnet wird, erstreckt sich über mehrere Tage; außerdem ist die dadurch erzielbare Photosensitivität zwar relativ hoch, jedoch nicht sehr dauerhaft. Daher ist auch die durch Bestrahlen induzierbare Brechzahländerung nicht dauerhaft, weswegen entsprechend hergestellte optische Komponenten häufiger durch erneute UV-Bestrahlung nachjustiert werden müssen. Bei einer weiteren bekannten Maßnahme, die als "Flame brushing" bekannt ist, behandelt man das Glas mit einer heißen Knallgasflamme. Durch einen Überschuß an Wasserstoff in der Flamme kommt zu einer Reaktion, die vermutlich mit der der Wasserstoffbeladung vergleichbar ist. Einzelheiten hierzu finden sich beispielsweise in einem Aufsatz von S. Gujrathi mit dem Titel *Photosensitivity in phosphorus-doped silica glass and optical waveguides,* Appl. Phys. Lett. 65 (4), 25 July 1994. Allerdings ist, ähnlich wie bei der Wasserstoffbeladung, auch hier Erhöhung der Photosensitivität nicht sehr dauerhaft.

Es ist daher Aufgabe der Erfindung, einen gattungsgemäßen planaren optischen Wellenleiter anzugeben, der nicht die angesprochenen Nachteile aufweist, die mit den Maßnahmen zur Erhöhung der Photosensitivität verbunden sind.

Der erfindungsgemäße planare optische Wellenleiter hat die in Anspruch 1 aufgeführten Merkmale. Die Erfindung beruht auf der Erkenntnis, daß hydrolytische Glasvorprodukte nach dem Sintern durch Wärmezufuhr nachverdichtet werden können, ohne daß sich dabei die chemische Zusammensetzung ändert.Die Bereiche mit höherer Dichte haben eine höhere Brechzahl als die übrigen Bereiche; die erzielbare Brechzahländerung $\Delta n$ liegt in der Größenordnung von $1,5 \cdot 10^{-3}$. Da dieser Effekt nicht auf dem Prinzip der Photosensitivität beruht, kommt es bei der Wärmezufuhr auch nicht zu einer chemischen Reaktion. Vor allem jedoch entfällt bei dem erfindungsgemäßen Verfahren die Notwendigkeit, durch eine der oben erläuterten bekannten Maßnahmen eine nennenswerte Photosensitivität zu erzielen. Damit hat ein nach dem erfindungsgemäßen Verfahren hergestellter planarer optischer Wellenleiter auch nicht die mit diesen Maßnahmen verbundenen Nachteile, etwa die höheren optischen Verluste oder die geringe Dauerhaftigkeit der Brechzahländerung.

Die Erfindung ist sowohl auf reine Glaswellenleiter, bei denen alle Schichten aus Glas bestehen, als auch auf optische Wellenleiter anwendbar, bei denen nicht alle Schichten aus Glas bestehen. Aus der JP-A-04238305 ist beispielsweise ein planarer optischer Wellenleiter bekannt, bei dem ein Teil der Deckschicht von einem thermooptische Eigenschaften aufweisenden Polymer gebildet wird. Unter "Schicht" ist hier und im folgenden auch eine Anordnung zu verstehen, die durch Strukturierung einer planaren zusammenhängenden Schicht entstanden ist. So kann nach Anspruch 2 die Glasschicht, in der die Bereiche mit erhöhter Brechzahl sind, auch eine strukturierte Kernschicht sein, also eine der Lichtführung dienende ebene Anordnung von Stegen mit annähernd rechteckigem Querschnitt.

Sinnvoll einsetzbar ist die Erfindung dort, wo gezielt eine Veränderung der Brechzahl induziert werden soll. Bei interferometrischen Anordnungen (Mach-Zehnder-Interferometer oder sog. "arrayed waveguide gratings" (AWG)) wird beispielsweise eine Feinabstimmung der optischen Phasenlage durch eine lokale Brechzahländerung vorgenommen. Bisher wird eine solche Feinabstimmung über eine UV-Bestrahlung erzielt ("UV-Trimming").

Besonders vorteilhaft läßt sich die Erfindung auf optische Wellenleiter mit integriertem Bragg-Gitter anwenden. Zur Herstellung läßt man beispielsweise den Strahl eines Infrarotlasers durch eine Phasenmaske hindurch auf den optischen Wellenleiter fallen läßt. Das Brechzahlprofil im Wellenleiter entspricht dann dem durch die Phasenmaske erzeugten Beugungsmuster. Im Gegensatz zu bekannten optischen Wellenleitern mit integriertem Bragg-Gitter ist hier das Brechzahlprofil dauerhaft, so daß es nicht zu einer Verschlechterung der Reflexionseigenschaften mit zunehmendem Alter kommt.

Es hat sich ferner gezeigt, daß der angesprochene Verdichtungseffekt nicht auftritt, wenn das Glasvorprodukt nicht hydrolytischen, sondern oxidischen Ursprungs ist. Wird ein solches oxidisches Glasvorprodukt gesintert, so ist das entstehende Glas so dicht, daß es sich durch Wärmebehandlung nicht mehr nachverdichten läßt. Wenn man eine aus einem hydrolytischen Glasvorprodukt hergestellte Kernschicht von aus einem oxidischen Glasvorprodukt hergestellten Glasschichten umgibt, läßt sich auf diese Weise die durch Wärmeeinwirkung hervorgerufene Brechzahländerung auf den Kernbereich des Wellenleiters beschränken, da nur dort eine Nachverdichtung stattfindet.

Die Ansprüche 5 bis 8 betreffen ein Verfahren zur räumlich gezielten Erhöhung der Brechzahl in einer Glasschicht, insbesondere einer Glasschicht in einem planaren optischen Wellenleiter nach einem der Ansprüche 1 bis 4. Nach Anspruch 6 wird die Wärme vorzugsweise mit Hilfe eines Lasers zugeführt, da durch dessen Strahlkollimierung eine hohe räumliche Präzision bei der Wärmezuführung gewährleistet ist. Vorzugsweise wird ein Laser mit einer langwelligen Betriebswellenlänge (Infrarotlaser) verwendet, da die bei bekannten Verfahren verwendeten UV-Laser nur einen geringen Temperaturanstieg im Glas hervorrufen.

Bei einem Ausführungsbeispiel nach Anspruch 8 wird der Kern nicht durch Strukturieren einer Kernschicht, sondern durch lokales Zuführen von Wärme definiert. Der Kern wird also durch einen schreibartigen Vorgang in die Kernschicht "eingebrannt". Dadurch entfällt der Prozeßschritt der Kernstrukturierung.

Die Erfindung wird nachfolgend anhand der Ausführungsbeispiele und der Zeichnungen eingehend erläutert. Es zeigen:

Fig. 1: räumliche Darstellung einer auf einem Träger aufgebrachten Glasschicht zur Erläuterung eines einfachen Ausführungsbeispiels der Erfindung;

Fig. 2: Schnitt durch einen erfindungsgemäßen planaren optischen Wellenleiter, dem ein Bragg-Gitter eingeprägt wird;

Fig. 3: räumliche Darstellung einer auf einem Träger aufgebrachten planaren optischen Wellenleiterstruktur, deren Kernschicht mittels Wärmezufuhr strukturiert wird.

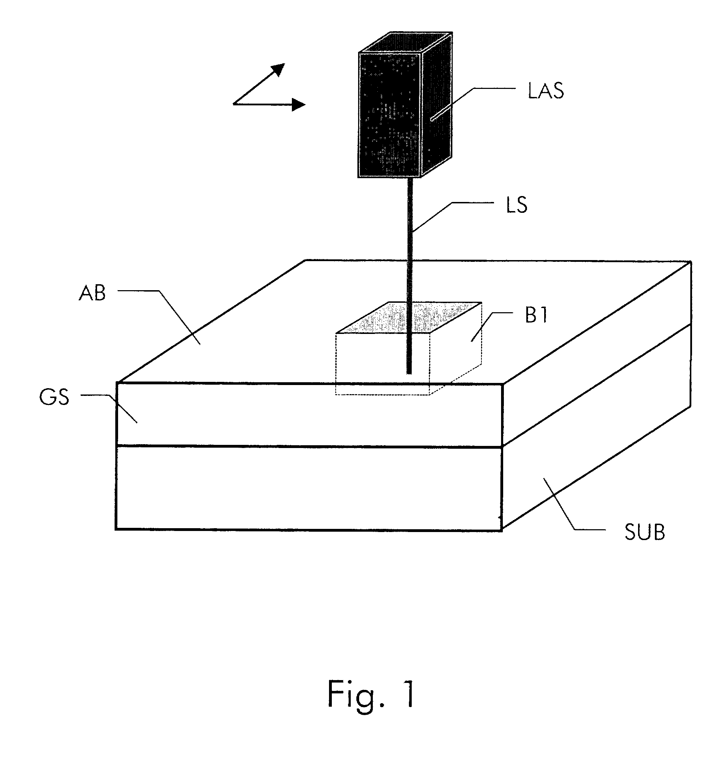

Zur Erläuterung des Erfindungsprinzips zeigt Fig. 1 einen Träger SUB, auf dem eine Glasschicht GS aufgebracht ist. Bei dem Träger kann es sich beispielsweise um einen Silizium-Kristall oder eine Keramik handeln. Zur Herstellung der Glasschicht GS wird mittels Flammhydrolyse (engl. "flame hydrolysis deposition", FHD) zunächst ein Glasvorprodukt auf dem Träger abgeschieden. Die Gasmischung in der Brennerflamme wird dabei so gewählt, daß das sich abscheidende Glasvorprodukt (engl. "soot") hydrolytischen Charakter hat. Dies läßt sich mit einem Wasserstoff/Sauerstoff-Verhältnisse in der Flamme erzielen, welches in der Größenordnung von etwa 4:6,5 liegt. Anschließend wird das Glasvorprodukt, welches noch als poröser Niederschlag vorliegt, in einem Ofen zu einem homogenen Glas versintert. Einzelheiten zu diesem Verfahren sind beispielsweise der EP-B 1-0 545 432 zu entnehmen.

Erfindungsgemäß wird nun in einem Bereich B1, in dem die Brechzahl der Glasschicht erhöht werden soll, mit Hilfe einer Wärmequelle Wärme zugeführt. In Fig. 1 ist diese Wärmequelle als ein Laser LAS ausgeführt. Die Emissionswellenlänge des Lasers sollte im langwelligen Bereich liegen (Infrarot), da dort die durch Flammhydrolyse-Abscheidung herstellbaren Gläser üblicherweise besonders stark absorbierend sind. Geeignet sind insbesondere gängige $CO_2$-Laser. Weniger geeignet sind UV-Laser wie Excimer-Laser, da aufgrund der vergleichsweise niedrigen Absorption nur eine geringe Temperaturerhöhung im Glas erzielbar ist. Grundsätzlich sind jedoch auch andere Wärmequellen, z. B. Lötlampen, verwendbar. Die Verwendung von Lasern hat jedoch den Vorteil, daß durch deren Strahlkollimierung eine hohe räumliche Präzision bei der Wärmezuführung gewährleistet ist.

In Fig. list durch die beiden Pfeile angedeutet, daß der Laser LAS und die Glasschicht relativ zueinander bewegbar sind. Der vom Laser LAS erzeugte Strahl LS wird so geführt, daß er den Bereich B1 überstreicht, in dem die Brechzahl erhöht werden soll. Die Geschwindigkeit der Relativbewegung muß dabei so gewählt werden, daß der Bereich B1 genügend erwärmt wird. Es hat sich gezeigt, daß eine Brechzahlerhöhung $\Delta n$ von ca. $1,5 \cdot 10^{-3}$ erzielbar ist, wenn kurzzeitig (einige Sekunden bis ca. 1 Minute) die Temperatur in diesem Bereich auf annähernd 1300 °C angehoben wird. Die erzielbare Dichteänderung beträgt ca. 3%. Die chemische Zusammensetzung in diesem Bereich ändert sich nicht, da durch die Erwärmung keine Zusatzstoffe hinzugefügt werden. Der angrenzende Bereich AB und der Bereich B1 haben daher zwar unterschiedliche Dichten, aber die gleiche chemische Zusammensetzung.

Anstelle einer sehr genau geführten Relativbewegung von Laser LAS zur Glasschicht GS kann auch eine Maske über der Glasschicht angeordnet sein. Es genügt dann, den Laser LAS relativ grob über die Maske hinwegzuführen. Die Genauigkeit, mit der die Grenzen des Bereichs B1 festlegbar sind, hängt nun nicht mehr von der Strahlführung, sondern von der Genauigkeit der Maske ab.

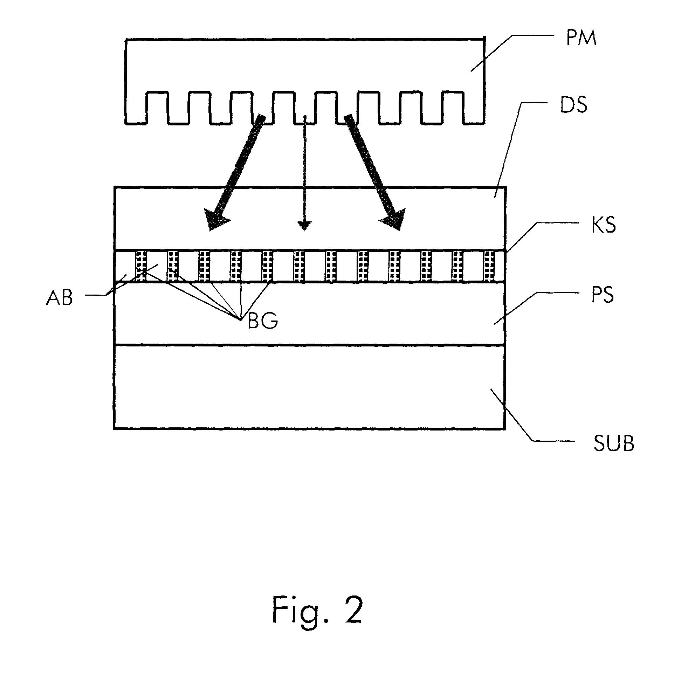

Fig. 2 zeigt ein anderes Ausführungsbeispiel der Erfindung. Dargestellt ist ein Träger SUB, auf dem ein planarer optischer Wellenleiter aufgebracht ist. Die Glasschicht, in der wenigstens ein Bereich mit erhöhter Brechzahl ist, ist hier die Kernschicht KS des planaren optischen Wellenleiters. Um eine Wellenführung zu ermöglichen, ist die Kernschicht KS substratseitig von einer Pufferschicht PS und zur anderen Seite von einer Deckschicht DS umgeben. Die Kernschicht KS ist mit Zusatzstoffen dotiert, die die Brechzahl der Kernschicht erhöhen. Aufgrund der Brechzahldifferenz an den Grenzflächen zwischen der Kernschicht KS und den umgebenden Schichten PS und DS wird in die Kernschicht eingekoppeltes Licht an diesen Grenzflächen totalreflektiert und somit in der Kernschicht geführt. Die Kernschicht kann als Filmwellenleiter oder auch als Streifenwellenleiter ausgeführt sein. Im letzteren Fall muß die Kernschicht strukturiert werden, worauf an dieser Stelle nicht näher eingegangen werden soll, da die Verfahren hierzu dem Fachmann bekannt sind.

Um im optischen Wellenleiter ein Bragg-Gitter zu erzeugen, wird über der Deckschicht DS eine Phasenmaske PM angeordnet, die von oben mit einem Infrarotlaser (nicht dargestellt) beleuchtet wird. Durch das Beugungsgitter in der Phasenmaske wird auf der dem optischen Wellenleiter zugewandten Seite ein Beugungsmuster erzeugt. An den Knoten des Beugungsmusters kommt es zu einer Temperaturerhöhung, die zu einer lokalen Verdichtung des Glases und dadurch zu einer Erhöhung der Brechzahl führt. Auf diese Weise läßt sich im optischen Wellenleiter ein Bragg-Gitter BG erzeugen, welches für die Bragg-Wellenlänge eine sehr hohe Reflektivität hat. Im Gegensatz zu bekannten Verfahren, bei denen man einen UV-Laser über eine Phasenmaske auf ein photosensitives Glas richtet, läßt die Reflektivität nicht im Laufe der Zeit nach.

Um die Brechzahländerung auf die Kernschicht KS zu beschränken, können die umgebenden Glasschichten PS und DS auf etwas andere Weise als die Kernschicht KS hergestellt werden. Wie oben erwähnt, hat das Glasvorprodukt, aus dem die spätere Kernschicht durch Sintern entsteht, hydrolytischen Charakter. Beim Abscheiden des Vorprodukts kommt es dabei typischerweise zu folgenden Reaktionen:

$$O_2 + 2\,H_2 \rightarrow 2\,H_2O + \text{Wärme}$$

$$SiCl_4 + 4\,H_2O \rightarrow Si(OH)_4\ (\text{Glasvorprodukt}) + 4\,HCl$$

Wählt man hingegen das Verhältnis von Wasserstoff zu Sauerstoff in der Flamme zu annähernd 1:1, so überwiegen folgende Reaktionen:

$$O_2 + 2\,H_2 \rightarrow 2\,H_2O + \text{Wärme}$$

$$SiCl_4 + O_2 \rightarrow SiO_2\ (\text{Glasvorprodukt}) + 2\,Cl_2$$

Das Glasvorprodukt hat nun einen oxidischen Charakter. Nach dem Sintern hat ein solches oxidisches Glasvorprodukt bereits eine so hohe Dichte, daß es sich *nicht* durch Zuführung von Wärme nachverdichten läßt. Stellt man die Pufferschicht PS und die Deckschicht DS nach dem soeben geschilderten Verfahren her, so läßt sich erreichen, daß Wärme, die gleichzeitig auf alle drei Schichten PS, KS und DS einwirkt, nur in der Kernschicht zu einer Brechzahlerhöhung führt.

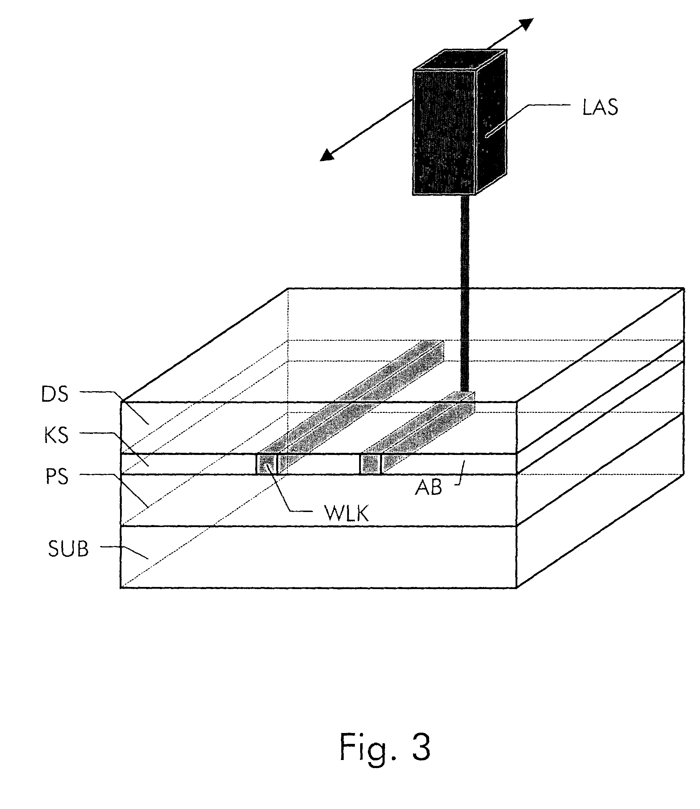

Dieser Effekt läßt sich auch ausnutzen, um Wellenleiterkerne in eine noch unstrukturierte Kernschicht „hineinzuschreiben". Fig. 3 zeigt eine auf einem Träger SUB aufgebrachte optische Wellenleiterstruktur in einer räumlichen Darstellung. Die Struktur umfaßt eine Deckschicht DS, eine unstrukturierte Kernschicht KS sowie eine Pufferschicht PS. Die Kernschicht KS ist aus einem hydrolytischen Glasvorprodukt hergestellt, während die Pufferschicht PS und die Deckschicht DS aus einem oxidischen Glasvorprodukt hergestellt sind. Wird nun von oben, etwa durch einen Laser LAS, Wärme zugeführt, so kommt es zwar in allen Schichten zu einer Temperaturerhöhung. Eine Verdichtung findet jedoch nur in der Kernschicht KS statt, da die beiden anderen Schichten aus einem oxidischen Glasvorprodukt hervorgegangen sind und daher nicht mehr nachverdichtbar sind. Auf diese Weise läßt sich in die Kernschicht ein Wellenleiterkern WLK einschreiben, indem z. B. der Laser LAS präzise über die Oberfläche der Deckschicht DS hinwegbewegt wird. Der Bereich, in dem die Brechzahl gegenüber an diesen Bereich angrenzenden Bereichen lokal erhöht ist, ist hier also der Wellenleiterkern WLK.

**Patentansprüche**

1. Planarer optischer Wellenleiter mit wenigstens einer Glasschicht (KS),

   a) die durch Abscheiden eines hydrolytischen Glasvorprodukts auf einer Unterlage (PS) im Wege der Flammhydrolyse und anschließendes Versintern des Glasvorprodukts hergestellt worden ist und

   b) die wenigstens einen Bereich (BG, WLK) hat, in dem die Brechzahl gegenüber an diesen Bereich angrenzenden Bereichen (AB) der Glasschicht lokal erhöht ist,

   **dadurch gekennzeichnet,** daß

   c) der wenigstens eine Bereich die gleiche chemische Zusammensetzung hat wie die angrenzenden Bereiche (AB) und daß

d) der wenigstens eine Bereich eine höhere Dichte hat als die angrenzenden Bereiche.

2. Planarer optischer Wellenleiter nach Anspruch 1, bei dem die Glasschicht eine strukturierte Kernschicht des optischen Wellenleiters ist.

3. Planarer optischer Wellenleiter nach Anspruch 2, bei dem mehrere Bereiche, in denen die Brechzahl gegenüber an diese Bereiche angrenzenden Bereichen lokal erhöht ist, ein Brechzahlgitter (BG in Fig. 2) bilden.

4. Planarer optischer Wellenleiter nach Anspruch 2, bei dem die Kernschicht (KS) zwischen zwei weiteren Glasschichten (PS, DS) angeordnet ist und diese zwei weitere Glasschichten eine höhere Dichte haben als die an den wenigstens einen Bereich angrenzenden Bereiche.

5. Verfahren zur räumlich gezielten Erhöhung der Brechzahl in einer Glasschicht (GS; KS), die durch Abscheiden eines hydrolytischen Glasvorprodukts auf einer Unterlage (SUB; PS) im Wege der Flammhydrolyse und anschließendes Versintern des Glasvorprodukts hergestellt worden ist, **dadurch gekennzeichnet,** daß keine Maßnahmen zur Erhöhung der Photosensitivität ergriffen werden und daß dort, wo die Brechzahl des Glases erhöht werden soll, Wärme zugeführt wird.

6. Verfahren nach Anspruch 5, bei dem die Wärme mit Hilfe eines Infrarot-Lasers (LAS) zugeführt wird.

7. Verfahren nach einem der Ansprüche 5 oder 6, bei dem das Glas eine Kernschicht (KS) eines planaren optischen Wellenleiters ist, die zwischen zwei weiteren Glasschichten (PS, DS) angeordnet ist, und bei dem die zwei weiteren Glasschichten durch Abscheiden eines oxidischen Glasvorprodukts und anschließendes Versintern des Glasvorprodukts hergestellt werden.

8. Verfahren nach Anspruch 6, bei dem das Glas eine Kernschicht (KS in Fig. 3) eines planaren optischen Wellenleiters bildet, wobei die Struktur der Kernschicht durch lokales Zuführen von Wärme definiert wird.

LAS

LS

AB

B1

GS

SUB

Fig. 1

PM

DS

KS

AB

BG

PS

SUB

# Fig. 2

Fig. 3